**Europäisches Patentamt**

**European Patent Office**

**Office européen des brevets**

(19)

(11) **EP 1 031 182 B1**

(12) **EUROPÄISCHE PATENTSCHRIFT**

(45) Veröffentlichungstag und Bekanntmachung des Hinweises auf die Patenterteilung:
**18.02.2004 Patentblatt 2004/08**

(51) Int Cl.$^7$: **H02P 1/00**

(21) Anmeldenummer: **98958907.2**

(22) Anmeldetag: **20.11.1998**

(86) Internationale Anmeldenummer:
**PCT/EP1998/007468**

(87) Internationale Veröffentlichungsnummer:
**WO 1999/027640 (03.06.1999 Gazette 1999/22)**

(54) **VERFAHREN UND SCHALTUNGSANORDNUNG ZUR ERZEUGUNG EINES PULSBREITENMODULIERTEN STELLSIGNALS FÜR EINEN GLEICHSTROMAKTUATOR**

METHOD AND CIRCUIT FOR GENERATING A PULSE-WIDTH MODULATED ACTUATING SIGNAL FOR A DIRECT CURRENT ACTUATOR

PROCEDE ET CIRCUIT POUR LA PRODUCTION D'UN SIGNAL DE REGLAGE A MODULATION D'IMPULSIONS EN LARGEUR POUR UN ACTIONNEUR A COURANT CONTINU

(84) Benannte Vertragsstaaten:
**DE FR GB IT**

(30) Priorität: **21.11.1997 DE 19751603**
**22.04.1998 DE 19817891**

(43) Veröffentlichungstag der Anmeldung:
**30.08.2000 Patentblatt 2000/35**

(73) Patentinhaber: **Continental Teves AG & Co. OHG 60488 Frankfurt am Main (DE)**

(72) Erfinder: **BÖHM, Jürgen D-65558 Oberneisen (DE)**

(56) Entgegenhaltungen:
**DE-A- 3 817 408        DE-A- 4 416 216**
**US-A- 5 666 035**

## Beschreibung

Die Erfindung bezieht sich auf ein Verfahren und eine Schaltungsanordnung zur Erzeugung eines pulsbreitenmodulierten Stellsignals für einen Gleichstrom-Aktuator, mit einem Pulsbreitenmodulator, bestehend aus einem Sägezahngenerator, der ein relativ hochfrequentes Sägezahnsignal mit einer konstanten Frequenz und einer Maximalamplitude, die gleich dem Wert der als Referenzspannung dienenden Versorgungsspannung ist, erzeugt, und mit einem Komparator, an den das Sägezahnsignal und ein kontinuierliches Stellsignal vorbestimmter Größe als Eingangssignale anlegbar sind, und der so aufgebaut ist, daß er ein erstes binäres Schaltsignal für mindestens einen im Gleichstromkreis des Aktuators, der an die Versorgungs-Gleichspannung angeschlossen ist, angeordneten Schalter abgibt, wenn die Sägezahnspannung unterhalb des Stellsignals liegt sowie ein zweites negiertes binäres Schaltsignal abgibt, wenn die Sägezahnspannung oberhalb des Stellsignals liegt, und der damit in einem vorgegebenen Tastverhältnis ein pulsbreitenmoduliertes Stellsignal mit einer den Wert des kontinuierlichen Stellsignals repräsentierenden Pulsbreite und einer Pulsamplitude entsprechend der Versorgungsspannung erzeugt.

Bei elektronischen Steuerungen und Regelungen werden häufig elektrische Gleichstrom-Aktuatoren eingesetzt, die für das elektrische bzw. elektromagnetische Teilsystem ein merkliches Tiefpaßverhalten in Bezug auf das Stellsignal haben. Typische Beispiele für derartige Aktuatoren sind Gleichstrom-Motoren bzw. Elektromagnete, wie sie beispielsweise zur Betätigung einer elektrischen Feststellbremse oder eines elektrohydraulischen Druckerzeugers bzw. bei der Fremdansteuerung eines elektromechanisch ansteuerbaren Bremskraftverstärkers Anwendung finden.

Zur Minimierung der Verlustleistung bei der Ansteuerung derartiger elektrischer Gleichstrom-Aktuatoren werden die zugehörigen Leistungsverstärker üblicherweise mittels eines pulsbreitenmodulierten Stellsignals im kHz-Bereich angesteuert. Der zugehörige Pulsbreitenmodulator besteht aus einem Sägezahngenerator, der ein sägezahnförmiges Signal mit der vorgegebenen, konstanten kHz-Frequenz und einer Maximalamplitude, die gleich dem Wert einer Referenzspannung ist, erzeugt, und einem Komparator, der das Sägezahnsignal mit dem Wert eines kontinuierlichen Stellssignal, abgeleitet aus dem Steuer- oder Regelkreis, das zwischen einem Maximal- und einem Minimalwert schwankt, vergleicht. Bei einem Gleichstrommotor als Aktuator ist das Stellsignal beispielsweise die Ankerspannung zur Einstellung des gewünschten Drehmomentes des Motors. Die Referenzspannung entspricht dem Nominalwert der Versorgungsspannung, wobei im Fall der Anwendung bei einem Kraftfahrzeug die Versorgungsspannung im allgemeinen gleich der Bordnetz-Batteriespannung ist.

Der Komparator des Pulsbreitenmodulators ist weiterhin so aufgebaut, daß er ein binäres Schaltsignal für mindestens einen im Gleichstromkreis des Aktuators angeordneten Schalter abgibt, wenn das Sägezahnsignal unterhalb des Stellsignals liegt, und der damit in einem vorgegebenen Tastverhältnis ein pulsbreitenmoduliertes Stellsignal mit einer den Wert des kontinuierlichen Stellsignals repräsentierenden Pulsbreite und einer Pulsamplitude entsprechend der Versorgungsspannung erzeugt.

Aufgrund des Tiefpaßverhaltens für das elektrische bzw. elektromagnetische Teilsystem des Aktuators stellt sich dann im Aktuator ein mittlerer kontinuierlicher Aktuatorstrom gewünschter Größe zur Betätigung des Aktuators entsprechend der Sollvorgabe aus der Steuerung bzw. der Regelung ein.

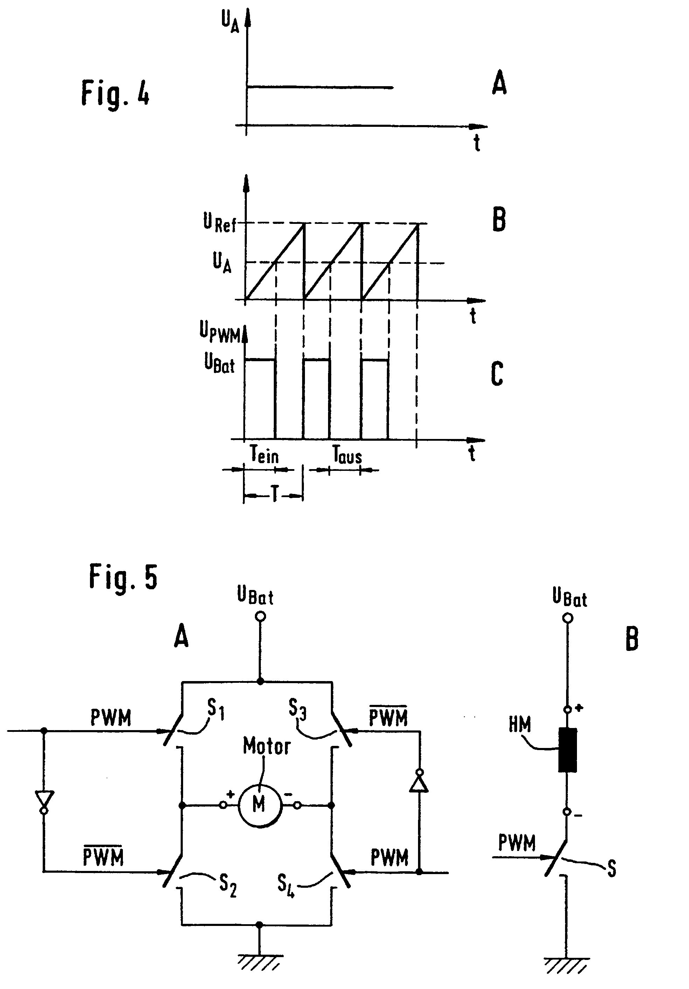

In Fig. 4 ist das Prinzip der Wirkungsweise eines derartigen Pulsbreitenmodulators dargestellt. Im Abschnitt A ist das kontinuierliche Stellsignal $U_A$ in seinem zeitlichen Verlauf dargestellt. Bei einem Gleichstrommotor als Aktuator ist beispielsweise dieses Stellsignal $U_A$ die Ankerspannung des Motors. Die Größe der Stellsignals wird in einem übergeordneten Steueroder Regelmodul, z.B. einem Mikroprozessor, so bestimmt, daß der Gleichstrom-Aktuator mit der notwendigen, gewünschten Stellgröße angesteuert wird.

Der Abschnitt B zeigt den Verlauf des Sägezahnsignals in Bezug auf das Stellsignal $U_A$, wobei die maximale Amplitude des Sägezahnsignals gleich der Referenzspannung ($U_{Ref}$) ist, die im Fall der Anwendung in einem Kraftfahrzeug überlicherweise der Bordnetz-Batteriespannung $U_{Bat,N}$ mit dem Nominalwert $U_{Bat,N}$ = 12 Volt entspricht.

Der Pulsbreitenmodulator erzeugt ein binäres Schaltsignal für mindestens einen im Gleichstromkreis des Gleichstrom-Aktuators liegenden Schalter, je nachdem, ob das Sägezahnsignal unteroder oberhalb des Stellsignals $U_A$ liegt.

In der Fig. 5 sind zwei typische bekannte Aktuatoren mit ihren Gleichstromkreisen, die von der Versorgungspannung, im Beispiel von der Batteriespannung des Kraftfahrzeuges, betrieben werden, dargestellt. Der Teil A zeigt einen Gleichstrommotor M für eine bidirektionale Bewegung, wie er beispielsweise zur Betätigung einer elektrischen Feststellbremse verwendet wird. Es sind vier Schalter $S_1$ bis $S_4$, die symbolisch die zugehörigen Leistungstransistoren bedeuten, dargestellt, die von dem erwähnten Schaltsignal PWM und einem negierten Schaltsignal $\overline{PWM}$ gesteuert werden.

Im Teil B ist die Ansteuerung eines Elektromagneten HM, wie er beispielswiese bei der Fremdbetätigung eines elektromechanisch ansteuerbaren Bremskraftverstärker Anwendung findet, über einen Schalter S, der von dem erwähnten Schaltsignal geschaltet wird, dargestellt.

Die Einschaltdauer $T_{ein}$ und die Ausschaltdauer $T_{aus}$ der Schalter ist in Fig. 4 im Teil C dargestellt. Dieses Diagramm zeigt das pulsbreitenmodulierte Stellsignal, das in den Gleichstromkreisen der Aktuatoren aufgrund der erwähnten Tiefpaßverhaltens zu einem mittleren Aktuatorstrom (nicht dargestellt) der gewünschten Größe führt.

Bei der Ableitung, insbesondere Berechnung des kontinuierlichen Stellsignals, sowie bei der Konfiguration des Pulsbreitenmodulators, wird im allgemeinen davon ausgegangen, daß die zur Ansteuerung des Aktuators vom Pulsbreitenmodulator zu schaltende Versorgungsspannung, im Beispiel die Bordnetz-Batteriespannung $U_{Bat}$, immer konstant ist und dem Nominalwert der Batteriespannung $U_{Bat,N}$ = 12 Volt entspricht, und sich daher bei einem definierten Stellsignal $U_A$ immer das gleiche Tastverhältnis p = $T_{ein}$/T ergibt. Dabei repräsentiert die Zeit T die Periodendauer des Sägezahnsignals. Mit der Annahme, daß die zu schaltende Versorgungsspannung $U_{Bat}$ ihrem Nominalwert $U_{Bat,N}$ entspricht, gilt dann für das Stellsignal $U_A$ der Zusammenhang:

$$U_A = p \cdot U_{Bat} = p \cdot U_{bat,N} \qquad (1)$$

Bei der Bestimmung des Tastverhältnisses p wird, insbesondere bei einer Realisierung auf einem Mikrocontroller, der Nominalwert der zu schaltenden Versorgungsspannung $U_{Bat,N}$ zugrunde gelegt. Entspricht nun die tatsächlich geschaltete Versorgungsspannung $U_{Bat}$ nicht ihrem Nominalwert $U_{Bat,N}$ , wie der bei der Berechnung des Tastverhältnisses p zugrunde gelegt wurde, dann bleibt das Tastverhältnis p und damit die Pulsbreite konstant, die Pulsamplitude weicht allerdings von ihrem Nominalwert, nämlich $U_{Bat,N}$ ab. Aufgrund Gl. (1) entsteht daher im Aktuator-Kreis im Mittel ein von der Vorgabe $U_A$ abweichender Spannungswert $U_A$, mit dem der Aktuator nun tatsächlich angesteuert wird.

Als Konsequenz ergibt sich, daß in diesem Fall die Stellgröße einer übergeordneten Regelung bzw. -Steuerung nicht exakt umgesetzt wird, da der Aktuator mit einem, z.B. von dem Stellsignal verschiedenen Wert, angesteuert wird. Dies führt zu einer Verschlechterung der Regelgüte, die umso schwerwiegender wird, je stärker die tatsächliche Versorgungsspannung von der Nominalspannung abweicht. In Einzelfällen kann es auch dazu führen, daß der Regelkreis einen vorgegebenen Sollwert nicht einstellen kann oder zu Instabilitäten neigt.

Der Erfindung liegt die Aufgabe zugrunde, die eingangs bezeichnete Schaltungsanordnung zur Erzeugung eines vorbestimmten pulsbreitenmodulierten Stellsignals für einen Gleichstrom-Aktuator, mit einem Pulsbreitenmodulator, bestehend aus einem Sägezahngenerator, der ein relativ hochfrequentes Sägezahnsignal mit einer konstanten Frequenz und einer Maximalamplitude, die gleich dem Wert der als Referenzspannung dienenden Versorgungsspannung ist, erzeugt, und mit einem Komparator, an den das Sägezahnsignal und ein kontinuierliches Stellsignal vorbestimmter Größe als Eingangssignale anlegbar sind, und der so aufgebaut ist, daß er ein erstes binäres Schaltsignal für mindestens einen im Gleichstromkreis des Aktuators, der an die Versorgungsspannung angeschlossen ist, angeordneten Schalter abgibt, wenn die Sägezahnspannung unterhalb des Stellsignals liegt sowie ein zweites negiertes binäres Schaltsignal abgibt, wenn die Sägezahnspannung oberhalb des Stellsignals liegt, und der damit in einem vorgegebenen Tastverhältnis ein pulsbreitenmoduliertes Stellsignal mit einer den Wert des kontinuierlichen Stellsignals repräsentierenden Pulsbreite und einer Pulshöhe entsprechend der Versorgungsspannung erzeugt, so auszubilden, daß das Tastverhältnis an den tatsächlichen Wert der Versorgungsspannung angepaßt wird.

Diese Aufgabe wird durch ein Verfahren gemäß der Erfindung dadurch gelöst, daß der tatsächliche Wert der Versorgungsspannung ermittelt wird und das Tastverhältnis an den tatsächlichen Wert der Versorgungsspannung angepaßt wird.

Dabei wird vorzugsweise ein Nominalwert der Versorgungsspannung durch den tatsächlichen Wert der Versorgungsspannung dividiert zur Bildung eines Skalierungsfaktor, mit dem das kontinuierliche Stellsignal umskaliert wird.

Eine geeignete Schaltungsanordnung zur Durchführung des Verfahrens zeichnet sich dadurch aus, daß ein erstes Funktionsmodul vorgesehen ist, das den Skalierungsfaktor errechnet, und dem ein zweites Funktionsmodul nachgeschaltet ist, in dem das kontinuierliche Stellsignal mit dem Skalierungsfaktor multipliziert wird und dem Pulsbreitenmodulator zugeführt wird.

Bei dem erfindungsgemäßen Verfahren und der Schaltungsanordnung zur Durchführung des Verfahrens wird daher nicht das aus dem Regel-/Steuerkreis abgeleitete, insbesondere errechnete Stellsignal dem Pulsbreitenmodulator unmittelbar zugeführt, sondern dieses Stellsignal wird mit einem Skalierungsfaktor multipliziert und erst dann dem Pulsbreitenmodulator zugeführt. Durch diese Umskalierung des Stellsignals ist gewährleistet, daß für das geforderte Stellsignal das Tastverhältnis so eingestellt wird, daß die mittels des Pulsbreitenmodulators an den Aktuator angelegte Aktuatorspannung unabhängig von der tatsächlich zu schaltenden Versorgungsspannung immer dem gewünschten Wert entspricht. Dies gilt sowohl für den Fall, daß die tatsächliche Versorgungsspannung gleich der Nominalspannung ist, als auch für Versorgungsspannungen, die sich mehr oder weniger stark von der Nominalspannung unterscheiden.

Vorzugsweise werden gemäß einer Weiterbildung der Erfindung die Funktionsmodule der Schaltungsanordnung durch Programm-Module eines Mikroprozessors gebildet, der in der Regel ohnehin in den übergeordneten Steuerungen bzw. Regelungen enthalten ist.

In einer weiteren vorteilhaften Ausgestaltung der Erfindung wird das Stellsignal vor der Umskalierung durch Multiplikation mit dem Skalierungsfaktor zunächst einem Begrenzer zugeführt, der das Stellsignal in beide Richtungen begrenzt.

Das erfindungsgemäße Verfahren und die Schaltungsanordnung zur Durchführung des Verfahrens findet vorzugsweise Anwendung bei elektronischen Systemen in Kraftfahrzeugen. So ist gemäß einer Ausgestaltung der Erfindung der Aktuator vorzugsweise ein Gleichstrommotor, der beispielsweise der Betätigung einer elektrischen Feststellbremse oder eines elektrohydraulischen Druckerzeugers dient.

Gemäß einer anderen Ausgestaltung der Erfindung ist der Aktuator ein Elektromagnet zur Fremdansteuerung eines elektromechanisch ansteuerbaren Bremskraftverstärkers in einem Kraftfahrzeug.

Bei all diesen Verwendungen in Kraftfahrzeugen ist vorzugsweise die Versorgungsspannung die Bordnetz-Batteriespannung.

Anhand eines in der Zeichnung dargestellten Ausführungsbeispiels wird die Erfindung näher beschrieben.

Es zeigen:

Fig. 1   ein Blockschaltbild der erfindungsgemäßen Funktionsmodule zum Umskalieren der einem Pulsbreitenmodulator zugeführten Stellspannung,

Fig. 2   ein Diagramm zur Erläuterung der Wirkungsweise der Erfindung,

Fig. 3   ein Flußdiagramm für die Umskalierung der Stellspannung am Beispiel einer Ankerspannung für einen Gleichstrommotor als Aktuator, und

Fig. 4   die bereits erläuterten Diagramme und Schaltungen zur Darstellung der bekannten prinzipiellen

und

Fig. 5   Wirkungsweise einer Pulsbreitenmodulator-Anordnung.

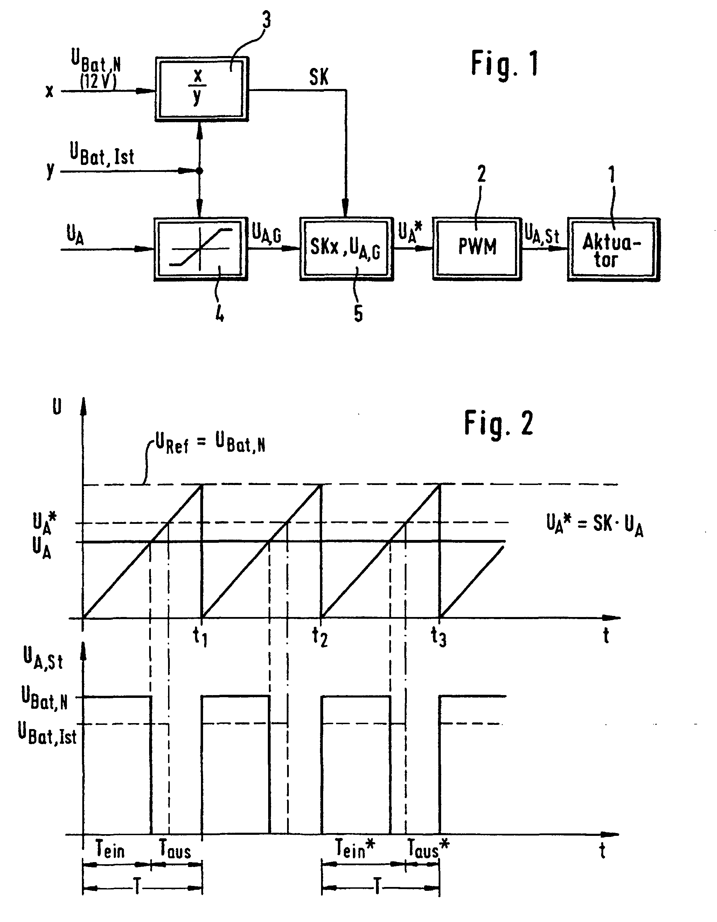

Die Fig. 1 zeigt eine Schaltungsanordnung zur Erzeugung eines Stellsignals $U_{A,St}$ für einen Gleichstrom-Aktuator 1, wie er beispielsweise in der Fig. 5 dargestellt ist. Die Schaltungsanordnung weist einen Pulsbreitenmodulator 2 auf, der einen bekannten Aufbau hat, wie er anhand der Fig. 4 bereits erläutert worden ist, d.h. der ein pulsbreitenmoduliertes Signal erzeugt, bei dem in der Pulsbreite die Information über das gewünschte Stellsignal enthalten ist.

Während bei der bekannten Ausführungsform das aus einem Regelkreis oder einer Steuerung, abgeleitete Stellsignal $U_A$ direkt dem Pulsbreitenmodulator 2 zugeführt wird, mit den erläuterten Nachteilen, wenn die der Bestimmung des Tastverhältnises für das Stellsignal zugrunde gelegten Nominal-Versorgungsspannung $U_{Bat,N}$ nicht mit der Ist-Versorgungs-Gleichspannung $U_{Bat,Ist}$ ,übereinstimmt, ist bei der erfindungsgemäßen Schaltungsanordnung ein erstes Funktionsmodul 3 vorgesehen, dem als Eingangsgröße der Wert der tatsächlichen Versorgungsspannung $U_{Bat,N}$ zugeführt wird, die mit dem vordefinierten Wert für die Nominal-Versorgungsspannung $U_{Bat,N}$ unter Bildung des Quotienten der Werte verglichen wird. Als Ausgangsgröße des Funktionsmoduls 3 steht daher die Information über einen Skalierungsfaktor zur Verfügung, der ein Maß für die Abweichung der tatsächlichen Versorgungsspannung von der Nominalspannung enthält, wobei der Wert des Skalierungfaktors an ein Funktionsmodul 5 weitergeleitet wird, in dem eine Multiplikation mit dem in einem vorgeschalteten Begrenzer 4 nach oben wie nach unten begrenzten Stellssignal $U_A$ erfolgt. Das Stellsignal wird dabei aus einer übergeordneten Regelung bzw. Steuerung unter Annahme einer konstanten Referenzspannung, die dem Wert der Nominal-Versorgungsspannung entspricht, bestimmt. Das skalierte Stellsignal als Ausgangsgröße des Funktionsmoduls 5 wird dann als Eingangssignal 2 dem Pulsbreitenmodulator 2 zugeführt. Ist, wie bereits erwähnt, der Aktuator ein Elektromotor, dann ist das Stellsignal die dem Elektromotor zuführende Aktuatorspannung und wenn der Aktuator im Kraftfahrzeug eingesetzt wird, ist die Versorgungsspannung üblicherweise die Bordnetz-Batteriespannung.

Mit der Schaltungsanordnung nach Fig. 1 wird erreicht, daß das Tastverhältnis des von dem Pulsbreitenmodulator 2 angesteuerten Aktuators 1 an eine zeitlich sich verändernde Versorgungs-Gleichspannung $U_{Bat}$ angepasst wird. Dieser Effekt soll anhand des Diagrammes nach Fig. 2, das demjenigen nach Fig. 4/B entspricht, erläutert werden. Die ausgezogene Sägezahnkurve soll den Verlauf bei einer Nominal-Versorgungsspannung $U_{Bat,N}$ wiedergeben. An den Schnittpunkten t1, t2 und t3 mit dem Stellsignal $U_A$ erzeugt der Pulsbreitenmodulator 2 ein Schaltsignal, ebenso nach Erreichen der Maximalamplitude.

Sinkt nun die Versorgungsspannung auf den gestrichelt dargestellten Wert $U_{Bat,Ist}$, dann folgt für das Stellsignal $U_{A,Ist}$, daß bei unverändertem Tastverhältnis p die Pulsamplitude, mit der der Aktuator angesteuert wird, ebenfalls auf den Wert $U_{Bat,Ist}$ absinkt. Anstelle des gewünschten Stellsignals $U_A$ wird daher ein um den Faktor SK vermindertes Signal dem Aktuator zugeführt. Damit nun das gewünschte Stellsignal $U_A$ auch bei einer vom Nominalwert der Versorgungsspannung abweichenden Größe tatsächlich dem Aktuator zugeführt wird, muß das gewünschte Stellsignal $U_A$ durch Multiplikation mit dem Skalierfaktor SK im Funktionsmodul 5 in Fig. 1 zu einem Stellsignal $U_A$ umskaliert werden. Man erkennt anhand Fig.2, daß sich dadurch das Tastverhältnis p entsprechend der gesunkenen Versorgungsspannung erhöht, so daß der Aktuator dann mit dem gewünschten Stellsignal angesteuert wird.

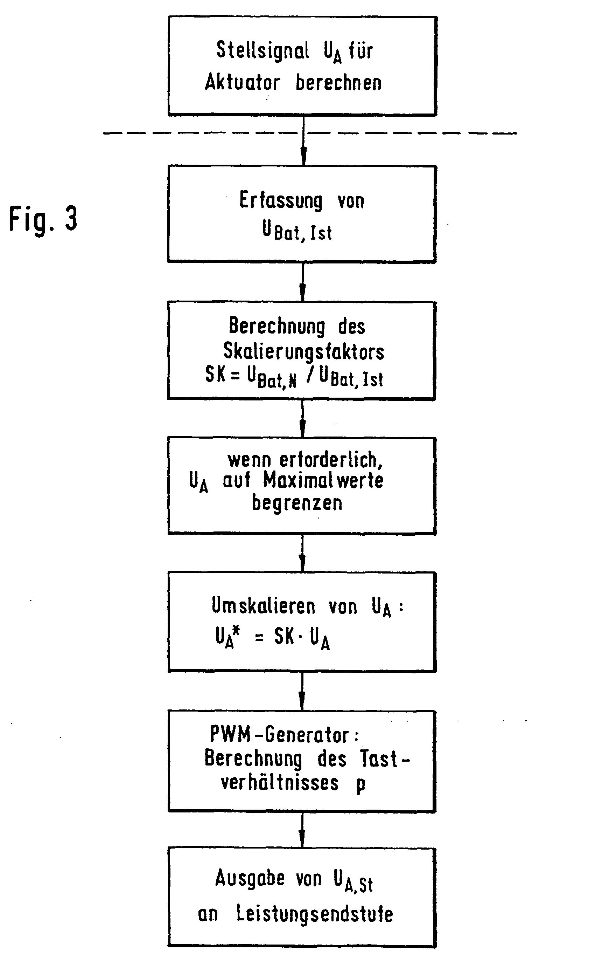

Die in Fig. 1 dargestellten Funktionsmodule sind vorzugsweise Programm-Module eines Mikroprozessors, der ohnehin in den modernen Steuerungs- und Regelungsanlagen vorhanden ist. Das zugehörige Flußdiagramm ist in Fig. 3 dargestellt, und ist aufgrund der Beschreibung der Schaltung in Fig. 1 in sich verständlich.

**Patentansprüche**

1. Verfahren zur Erzeugung eines pulsbreitenmodulierten Stellsignals ($U_{A,st}$) für einen Gleichstromaktuator, das ein von einem kontinuierlichen Stellsignal ($U_A$) abhängiges Tastverhältnis (p) aufweist und dessen Wert durch die Pulsbreite repräsentiert wird und dessen Amplitude einer Versorgungsspannung entspricht, **dadurch gekennzeichnet, daß** der tatsächliche Wert der Versorgungsspannung ($u_{Bat,Ist}$) ermittelt wird und das Tastverhältnis (p) an den tatsächlichen Wert der Versorgungsspannung angepaßt wird.

2. Verfahren nach Anspruch 1 **dadurch gekennzeichnete daß** ein Nominalwert ($U_{Bat,N}$) der Versorgungsspannung durch den tatsächlichen Wert der Versorgungsspannung ($U_{Bat,Ist}$) dividiert wird zur Bildung eines Skalierungsfaktors (SK), mit dem das kontinuierliche Stellsignal ($U_A$) umskaliert wird.

3. Schaltungsanordnung zur Durchführung des Verfahrens nach Anspruch 1 oder 2 mit einem Pulsbreitenmodulator (2) zur Ansteuerung des Gleichstromaktuators **dadurch gekennzeichnet, daß** ein erstes Funktionsmodul (3) vorgesehen ist, das den Skalierungsfaktor errechnet, und dem ein zweites Funktionsmodul (5) nachgeschaltet ist, in dem das kontinuierliche Stellsignal ($U_A$) mit dem Skalierungsfaktor (SK) multipliziert wird und dem Pulsbreitenmodulator (2) zugeführt wird.

4. Schaltungsanordnung nach Anspruch 3, **dadurch gekennzeichnet, daß** die Funktionsmodule (3,5) durch programm-Module eines Mikroprozessors gebildet sind.

5. Schaltungsanordnung nach Anspruch 3, **dadurch gekennzeichnet, daß** ein Begrenzer (4) zur Begrenzung des Stellsignals ($U_A$) in beiden Richtungen vorgesehen ist, der dem zweiten Funktionsmodul (5) vorgeschaltet ist.

6. Schaltungsanordnung nach einem der Ansprüche 3 bis 5, **dadurch gekennzeichnet, daß** der Aktuator (2) ein Gleichstrommotor ist.

7. Schaltungsanordnung nach Anspruch 6, **dadurch gekennzeichnet, daß** der Gleichstrommotor der Betätigung einer elektrischen Feststellbremse dient.

8. Schaltungsanordnung nach Anspruch 6, **dadurch gekennzeichnet, daß** der Gleichstrommotor der Betätigung eines elektrohydraulischen Druckerzeugers dient.

9. Schaltungsanordnung nach einem der Ansprüche 3 bis 5, **dadurch gekennzeichnet, daß** der Aktuator (2) ein Elektromagnet ist.

10. Schaltungsanordnung nach Anspruch 9, **dadurch gekennzeichnet, daß** der Elektromagnet der Fremdansteuerung eines elektromechanisch ansteuerbaren Bremskraftverstärkers dient.

11. Schaltungsanordnung nach einem der Ansprüche 3 bis 10, **dadurch gekennzeichnet, daß** der tatsächliche Wert der Versorgungsspannung die Bordnetz-Batteriespannung ist.

**Claims**

1. A method for generating a pulse-width modulated actuating signal ($U_{A,st}$) for a direct current actuator, which exhibits a pulse duty factor (p) that is dependent on a continuous actuating signal ($U_A$) and whose value is represented by the pulse width and whose amplitude corresponds to a supply voltage, **characterized in that** the actual value of the supply voltage ($U_{Bat,Ist}$) is determined and the pulse duty factor (p) is adapted to the actual value of the supply voltage.

2. A method according to Claim 1, **characterized in that** a nominal value ($U_{Bat,N}$) of the supply voltage is divided by the actual value of the supply voltage ($U_{Bat,Ist}$) in order to form a scaling factor (SK) which is used to rescale the continuous actuating signal ($U_A$).

3. A circuit arrangement for implementing the method according to Claim 1 or Claim 2 with a pulse-width modulator (2) for controlling the direct current actuator, **characterized in that** a first functional module (3) which calculates the scaling factor is provided and that a second functional module (5), which is located downstream of the first functional module (3), multiplies the continuous actuating signal ($U_A$) by the scaling factor (SK) and feeds the result to the pulse-width modulator (2).

4. A circuit arrangement according to Claim 3, **characterized in that** program modules of a microprocessor form the functional modules (3,5).

**5.** A circuit arrangement according to Claim 3, **characterized in that** a limiter (4) for limiting the actuating signal ($U_A$) in both directions is provided and is located upstream of the second functional module (5).

**6.** A circuit arrangement according to one of Claims 3 to 5, **characterized in that** the actuator (2) is a direct current motor.

**7.** A circuit arrangement according to Claim 6, **characterized in that** the d.c. motor is used to actuate an electric parking brake.

**8.** A circuit arrangement according to Claim 6, **characterized in that** the d.c. motor is used to actuate an electrohydraulic pressure generator.

**9.** A circuit arrangement according to one of Claims 3 to 5, **characterized in that** the actuator (2) is an electromagnet.

**10.** A circuit arrangement according to Claim 9, **characterized in that** the electromagnet is used for the external control of an electromechanically actuated brake force booster.

**11.** A circuit arrangement according to one of Claims 3 to 10, **characterized in that** the actual value of the supply voltage is the battery voltage of the vehicle electric system.


**Revendications**

**1.** Procédé de production d'un signal de réglage modulé en largeur d'impulsion ($U_{A,St}$), pour un actionneur à courant continu, qui présente un rapport durée d'impulsion-intervalle entre impulsions (p) dépendant d'un signal de réglage ($U_A$) continu et dont la valeur est représentée au moyen de la largeur d'impulsion et dont l'amplitude correspond à une tension d'alimentation, **caractérisé en ce que** la valeur effective de la tension d'alimentation ($U_{Bat,Ist}$) est déterminée et le rapport durée d'impulsion-intervalle entre impulsions (p) est adapté à la valeur effective de la tension d'alimentation.

**2.** Procédé suivant la revendication 1, **caractérisé en ce qu'**une valeur nominale ($U_{Bat,N}$) de la tension d'alimentation est divisée par la valeur effective de la tension d'alimentation ($U_{Bat,Ist}$) pour former un facteur d'ajustement d'échelle (SK) au moyen duquel le signal de réglage continu ($U_A$) fait l'objet d'un ajustement d'échelle.

**3.** Agencement de circuit pour la mise en oeuvre du procédé suivant la revendication 1 ou 2, comprenant un modulateur de largeur d'impulsion (2) pour la commande de l'actionneur à courant continu, **caractérisé en ce qu'**il est prévu un premier module de fonction (3) qui calcule le facteur d'ajustement d'échelle et en aval duquel est disposé un second module de fonction (5) dans lequel le signal de réglage continu ($U_A$) est multiplié par le facteur d'ajustement d'échelle (SK) et est envoyé au modulateur de largeur d'impulsion (2).

**4.** Agencement de circuit suivant la revendication 3, **caractérisé en ce que** les modules de fonction (3, 5) sont formés de modules de programme d'un microprocesseur.

**5.** Agencement de circuit suivant la revendication 3, **caractérisé en ce qu'**il est prévu un circuit de limitation (4) qui sert à limiter le signal de réglage ($U_A$) dans les deux sens et qui est connecté en amont du second module de fonction (5).

**6.** Agencement de circuit suivant l'une des revendications 3 à 5, **caractérisé en ce que** l'actionneur (2) est un moteur à courant continu.

**7.** Agencement de circuit suivant la revendication 6, **caractérisé en ce que** le moteur à courant continu sert à l'actionnement d'un frein électrique de stationnement.

**8.** Agencement de circuit suivant la revendication 6, **caractérisé en ce que** le moteur à courant continu sert à l'actionnement d'un générateur de pression électrohydraulique.

**9.** Agencement de circuit suivant l'une des revendications 3 à 5, **caractérisé en ce que** l'actionneur (2) est un électroaimant.

**10.** Agencement de circuit suivant la revendication 9, **caractérisé en ce que** l'électroaimant sert à la commande extérieure d'un amplificateur de force de freinage à commande électromécanique.

**11.** Agencement de circuit suivant l'une des revendications 3 à 10, **caractérisé en ce que** la valeur effective de la tension d'alimentation est la tension de batterie du réseau de bord.

Fig. 1

Fig. 2

$$U_A^* = SK \cdot U_A$$

Fig. 3

Stellsignal $U_A$ für
Aktuator berechnen

---

Erfassung von
$U_{Bat,Ist}$

Berechnung des
Skalierungsfaktors
$SK = U_{Bat,N} / U_{Bat,Ist}$

wenn erforderlich,
$U_A$ auf Maximalwerte
begrenzen

Umskalieren von $U_A$:
$U_A^* = SK \cdot U_A$

PWM-Generator:
Berechnung des Tastverhältnisses p

Ausgabe von $U_{A,St}$
an Leistungsendstufe

Fig. 4

Fig. 5